# EUROPEAN PATENT APPLICATION

(11) **EP 4 019 817 A1**
(43) Date of publication of application: **29.06.2022**
(21) Application number: 21214968.6
(22) Date of filing: 16.12.2021
(51) Int. Cl.: F16K 27/02, F16K 27/12

(54) **VALVE HOUSING FOR A VALVE**

(30) Priority: 17.12.2020 DK PA202070847
(71) Applicant: Danfoss A/S, 6430 Nordborg (DK)
(72) Inventor: ZAGAR, Tomaz, 6430 Nordborg (DK); BYRNE, Mark Francis, 6430 Nordborg (DK); REBERNIK, Jure, 6430 Nordborg (DK)
(74) Representative: Inspicos P/S

(57) **Abstract**

The present invention relates to a method of making a valve housing (10) for a valve (1), where the valve housing formed of a main part (11) and a cover (12), where the first
- the main part (11) is formed with an outer edge section (20) defining an inner surface and an outer surface and an opening from the externals to an inner hollow (6), where the inner surface is formed with an inner recess (23) with a first surface (22) and second surface (24) and a first contact surface (27), and where
- the cover (12) comprises a fourth surface (31) and a second contact surface (33), and where
the method comprises the steps of positioning the cover (12) inside the main part (11) such that the fourth surface (31) rests on the second surface (24) and the second contact surface (33) rests on the first contact surface (27), and where a next step is to radially compress the at least the outer part of the outer edge section (20) to a second angle where the upper and lower outer edge surfaces (30) of the cover (12) contacts the first surface (22) and second surface (24) to fix cover (12) in the position.

The present invention further relates to the first (11) and second (12) parts and to the valve housing.

## Description

### BACKGROUND

The present invention relates to a valve, or more specifically to the valve housing of the valve.

Valves typically are formed of a valve housing forming an inner hollow between a flow inlet and outlet. Valve elements are positioned in the inner hollow to perform regulation of the fluid flow passing between inlet and outlet, where these typically includes a displaceable valve plug element to be operating in connection to a valve seat, possible also biasing elements and/or diaphragms, sealing elements etc.

To insert the valve elements the valve housing often is formed of a main part comprising the inner hollow and any flow paths between a fluid inlet and outlet, and where an opening is formed for the introduction and installation of the valve elements in the inner hollow. A cover of the valve housing then is positioned to close the opening, where the cover typically is connected by bolting, brazing, welding etc.

The present invention relates to make a valve housing of a main part and a cover in a manner where stresses are reduced and using less material, the latter leading to a cheaper valve.

### SUMMARY OF THE INVENTION

The solution is defined in the claims.

This includes introducing a main part of the valve housing for a valve formed with an outer edge section defining an inner surface and an outer surface and an opening from the externals to an inner hollow, where the inner surface is formed with an inner recess with a first surface and second surface defining a plane P where a cover of the valve housing is adapted to be positioned to close the opening, where at least the outer part of the outer edge section is inclined relative at a first angle to the line L extending orthogonal to the plane P from the inner hollow to the opening.

The second surface may be continuous at the full inner surface circumference, or it may be formed in sections at the circumference.

The outer part of the outer edge section may be adapted to be forced inwardly to a second angle such that the outer part of the outer edge section extends more parallel to the line L than at the first angle. Further, the inner recess may be adapted to engage with the edge of the cover in such a manner that only the second surface engage with an outer edge surface when the outer part of the outer edge section is at the first inclination. This ensures the first surface is adapted to engage an outer edge surface of the cover when forced to the second angle, to fix the cover in the position within the opening of the main part, closing it.

The main part may be formed with a first contact surface adapted to contact a matching second contact surface of the cover.

The first contact surface may edge (share an edge) with a first sloping surface which incline relative to the line L at a third angle, and where a second sloping surface may incline similarly such that their surfaces does not conflict when the cover is inserted within the opening of the main part.

An outer recess may be formed in the main part outer surface and positioned just below the inner recess in the direction from the opening towards the inner hollow to reduce stresses in the material during the compression process.

The cover of a valve housing may be adapted to be inserted in connection to the main part according to any of the preceding embodiments, where the cover comprises a fourth surface adapted to rest on the second recess.

The edge portion of the cover may be formed with curving outer part giving some resilient effect assisting to keep it in place.

The present invention further relates to the valve housing formed by the main part according and the cover according to any of to any of the previous embodiments.

The present invention further relates to a valve housing formed of
- a main part formed with an outer edge section defining an inner surface and an outer surface and an opening from the externals to an inner hollow, where the inner surface is formed with an inner recess with a first surface and second surface, the main part further comprising a first contact surface, the valve housing further comprising
- a cover comprising a fourth surface and a second contact surface and inserted in connection to the main part such that the fourth surface rests on the second recess,
where P defines the plane where the cover is positioned to close the opening, where the line L extends orthogonal to the plate P from the inner hollow towards the opening.

The present invention further relates to the method of making a valve housing for a valve, where the valve housing formed of a main part and a cover, where
- the main part is formed with an outer edge section defining an inner surface and an outer surface and an opening from the externals to an inner hollow, where the inner surface is formed with an inner recess with a first surface and second surface defining a plane P where a cover of the valve housing is adapted to be positioned to close the opening, where at least the outer part of the outer edge section is inclined relative at a first angle to the line L extending orthogonal to the plane P from the inner hollow to the opening, the main part further comprising a first contact surface, and where - the cover comprises a fourth surface and a second contact surface, and where the method comprises the steps of positioning the cover inside the main part such that the fourth surface rests on the second surface, and where a next step is to radially compress the at least the outer part of the outer edge section to a second angle where the upper and lower outer edge surfaces of the cover contacts the first surface and second surface to fix cover in the position.

The method relates to the first and covers comprising the features of any of the embodiments.

### FIGURES

- Fig. 1: A general valve where the present invention could be applied
- Fig. 2: An embodiment an outer edge section with an opening of the main part of the valve housing according to the present invention.
- Fig. 3: An embodiment cover of the valve housing according to the present invention.
- Fig. 4: The cover positioned within the opening of the main part.
- Fig. 5: The cover fixed to the main part by compression of at least an outer section of the main part outer edge section.

### DETAILED DESCRIPTION OF THE INVENTION

It should be understood, that the detailed description and specific examples, while indicating embodiments of the invention, are given by way of illustration only, since various changes and modifications within the spirit and scope of the invention will become apparent to those skilled in the art from the detailed description.

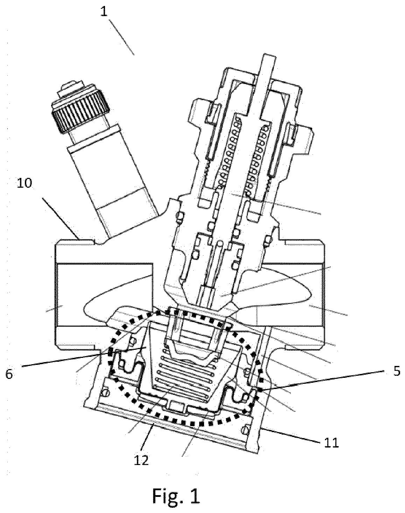

Fig. 1 illustrate one example valve (1) where the present invention could be implemented. The valve is formed of a valve housing (10) forming an inner hollow (6) between a flow inlet and outlet. Valve elements (5) are positioned in the inner hollow (6) to perform regulation of the fluid flow passing between inlet and outlet, where these typically includes a displaceable valve plug element to be operating in connection to a valve seat, possible also biasing elements and/or diaphragms, sealing elements etc.

The valve housing (10) is formed of two parts, a main part (11) formed with the inner hollow (6) and an opening through which valve elements (5) can be inserted. The cover (12) of the valve housing is adapted to be connected to the main part (11) to seal the opening once the valve elements (5) have been installed in the inner hollow (6).

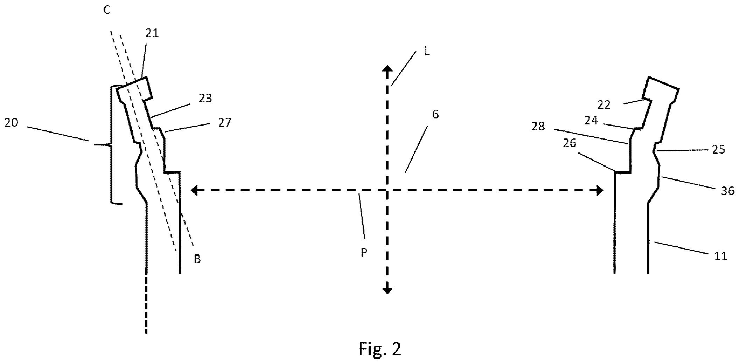

Fig. 2 illustrates a main part (11) edge section (20) encircling the opening, where the edge section (20) forms features (21-24) adapted to contact with the cover (12) when inserted to seal the opening, where this position defines a plane P.

The edge section (20) is formed to operate as a 'hook' (21) where it at an end is formed with an inner recess (23) formed between a first recess side wall, or edge, (21) and a cover second recess side wall, or surface, (24). In an embodiment the inner recess (23) is continuous and encircles the full perimeter of the opening but could alternatively be one or more individual sub-recesses (23) formed along the opening perimeter.

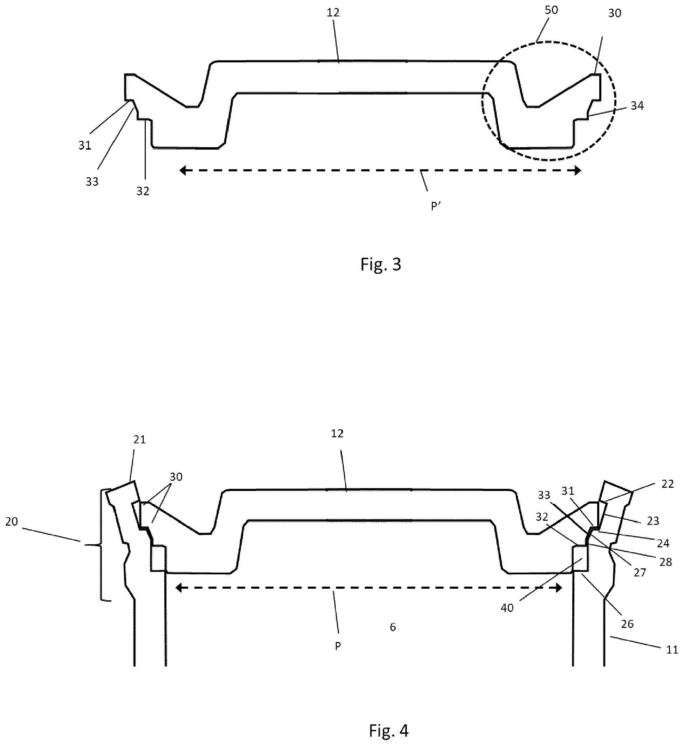

The recess (23) and its surfaces (22, 24) is adapted to catch the edge of the cover (12). Initially the edge section (20) is formed such that a parallel line C to the edge section (20) intersects the plane P with a first angle being the large angle defined from the opening towards the line C. The first angle is sufficiently large to allow the insertion of the cover (12) into the opening until an outer edge surface (30) (see figs. 3 and 4) contacts the second surface (24). This correspond to at least the outer part of the outer edge section (20) is inclined relative at a first angle to the line L extending orthogonal to the plane P from the inner hollow (6) to the opening.

Due to the angle of the edge section (20) the first surface (22) defines an opening with a larger diameter than the second surface (24) and the cover (12), whereas the second surface (24) defines a smaller diameter than the cover (12).

A first sloping surface (27) may be formed possible in direct contact with the second surface (24), and is parallel to a line B intersecting the plane P at a second angle being the large angle defined from the opening towards the line B. A third surface or recess (26) may be positioned in the inner of the main part (11) below the first sloping surface (27) seen in relation to the outer opening.

A first contact surface (28) is formed between the second surface (24) and third surface (26), such as in the embodiment with the first sloping surface (27) between the first sloping surface (27) and the third surface (26). The first contact surface (28) may be parallel to the line L, as illustrated, or being sloping with an angle relative to the line L.

Further, the inner corner or edge formed by the third surface (26) and the first contact surface (28) assists in reducing the stresses, especially after the crimping. This partly is by the two surfaces of the third surface (26) and first contact surface (28) directing the forces towards the inner corner. Further to reduce the stresses and to make a reinforcement, the wall thickness of the first housing (11) in the area around the inner corner of the third surface (26) and the first contact surface (28) is widened (36) forming an outwardly reaching 'bulge'.

Fig. 3 illustrates a side view of an embodiment of the cover (12). It may have an extension being essentially sheet-formed, or at least formed such, that when positioned in the defined closing positioned within the opening of the main part (11), then it extends in parallel to the plane P and fills at least most of the opening.

At the edges the cover (12) comprises an outer edge surface (30) adapted to be 'gapped' by the edge section (20) of the main part (11). A fourth surface (31) of the valve housing (10) forms a first contact surface of the outer edge surface (30) to the second surface (24) of the valve housing (10) formed in the main part (11).

A second sloping surface (33) may formed possible in direct contact with the fourth surface (31), and when positioned at the closing position within the main part (11), it slopes parallel to a line B intersecting the plane P at a second angle being the large angle defined from the opening towards the line B.

In an embodiment, the first (27) and second (33) sloping surfaces are adapted to corporate during assembly of the cover of the valve housing (12) to the main part of the valve housing (11). An O-ring may be pre-mounted on the cover (12) of the valve housing (10), and during assembly, the first sloping surface (27) is there to guide the to slide into the (10). The second sloping surface (33) is positioned in a way that it avoids the contatct with the first sloping surface (27) in a manner that obstructs the introduction of the o-ring. In one embodiment the second sloping surface (33) would slope, but would e.g. be parallel to the line P.

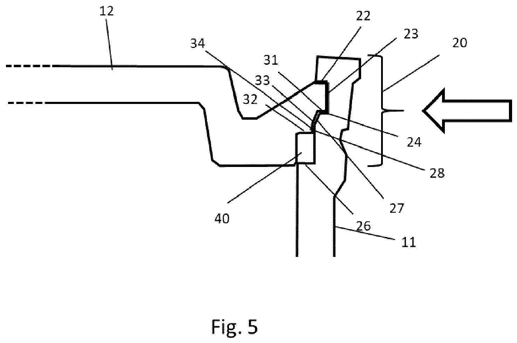

In an alternative or related embodiment, the first (27) and second (33) sloping surfaces are adapted to be in contact when the cover (12) is positioned in the closing position in the opening of the main part (11). This contact could be at any time when the cover (12) is in position, or alternatively only during fixation of the cover (12) in the position (see fig. 5 and the associated text), and/or once it has been fixed in the position.

A second contact surface (34) is formed between the fourth surface (31) and fifih surface (32), such as in the embodiment with the second sloping surface (33) between the second sloping surface (33) and the fifih surface (32). When in the closing position of the cover (12), the second contact surface (34) may be parallel to the line L, as illustrated, or being sloping with an angle relative to the line L.

In an embodiment, the first (28) and second (34) contact surfaces are adapted to be in contact when the cover (12) is positioned in the closing position in the opening of the main part (11). This contact could be at any time when the cover (12) is in position, or alternatively only during fixation of the cover (12) in the position (see fig. 5 and the associated text), and/or once it has been fixed in the position.

In the illustrated embodiment the cover (12) further is formed with a fifih surface (32) adapted to corporate with the third surface (26) of the main part (11) such as to confine a sealing element like a gasket.

In the illustrated embodiment the cover (12) at the edge portions is formed with curving outer part (50) giving some resilient effect. The curving outer part (50) can be slightly compressed to give a spring effect outwards. When the cover (12) is inserted into the opening when the cover (12) is squeezed in position this is tensioning the curving outer part (50) which therefore pushes towards the inner recess (23) in the main part (11). This assists in keeping it in position and to seal the opening.

The curving out part (50) may also be tensioned when the outer edge section (20) is compressed towards the cover (12) to hook it in a fixed position by the recess (23) and its first surface (22) and second surface (23). In this embodiment the diameter of the cover (12) therefore slightly larger than the diameter of the opening defined by the first surface (22) after it has been compressed.

Fig. 4 shows the cover (12) in the closing position within the opening. The fourth surface (31) is illustrated being in contact on the second surface (24), and the second contact surface (34) is in contact with the first contact surface (28.

When positioning the cover (12) in the opening of the main part (11), the second surface (24) and/or first sloping surface (27) thus defines the closing position where the cover (12) is to be positioned, and holds it in position during fixation, as will be explained later.

Illustrated is also a hollow (40) defined by the fifih surface (32) the third surface (26) where a sealing element like a gasket can be positioned to ensure fully a fluid tight sealing.

Fig. 5 shows the fixation using a crimping process. The outer edge section (20) is pressed inwards by some tool until the hook part (21) engages with the cover (12) outer edge surface (30), such that it is confined in the inner recess (23) between first (22) and second (24) surfaces. The hook part (21) thus 'hooks' onto the outer edge surface (30). The second sloping surface (33) may be resting on the first sloping surface (27) to give a stable contact during the operation. The corner between the first sloping surface (27) and the second surface (24) forms the pivot for the pressing of the outer edge section (20), leaving the rest of the main part (11) essentially unaffected.

The second contact surface (34) may be contacting the first contacting surface (28) to form an inner surface against which the outer edge section (20) can be crimped.

The outer section (20) in a main embodiment is in this manner compressed inwards at the full circumference, thus forming a crimping, the diameter of the opening defined by the first surface (22) compressed to be smaller than the cover (12) diameter, possible to the same size as the diameter of the opening defined by the second surface (24).

In the embodiment with the curving out part (50), this section thus is tensioned by the crimping of the outer edge section (20), and subsequently pushes outwards to increase the fixation of the cover (12).

An outer recess (25) in the main part (11) positioned just below the inner recess (23) in the direction from the opening towards the inner hollow (6) is formed to reduces stresses in the material during the compression process. This may be formed at the full circumference, or in sections.

In general the stresses are also reduced in that the radially crimping of the outer edge section (20) are made with the contacts (27, 28, 33, 34) of the first (11) and second (12) parts, and by the third surface (26) and widening (36).

### References:

- 1 -: Valve
- 5 -: Valve elements
- 6 -: Inner hollow
- 10 -: Valve housing
- 11 -: Main part of the valve housing
- 12 -: Cover of the valve housing
- 20 -: Edge section
- 21 -: Hook part
- 22 -: First surface
- 23 -: Inner recess/catch
- 24 -: Second surface
- 25 -: Outer recess
- 26 -: Third surface - edge
- 27 -: First sloping surface
- 28 -: First contact surface
- 30 -: Outer edge surface
- 31 -: Fourth surface - edge
- 32 -: Fifth surface - edge
- 33 -: Second sloping surface
- 34 -: Second contact surface
- 36 -: Widening of first valve housing
- 40 -: Hollow
- 50 -: Curving outer part giving some spring ability

## Claims

1. Main part (11) of the valve housing (10) for a valve formed with an outer edge section (20) defining an inner surface and an outer surface and an opening from the externals to an inner hollow (6), where the inner surface is formed with an inner recess (23) with a first surface (22) and second surface (24) defining a plane P where a cover (12) of the valve housing (10) is adapted to be positioned to close the opening, where at least the outer part of the outer edge section (20) is inclined relative at a first angle to the line L extending orthogonal to the plane P from the inner hollow (6) to the opening.

2. Main part (11) according to claim 1, where the second surface (24) is continuous at the full inner surface circumference.

3. Main part (11) according to claim 1, where the outer part of the outer edge section (20) is adapted to be forced inwardly to a second angle such that the outer part of the outer edge section (20) extend more parallel to the line L than at the first angle.

4. Main part (11) according to any of claims claim 1-3, and where the inner recess (23) is adapted to engage with the edge of the cover (12) in such a manner that only the second surface (24) engage with an outer edge surface (30) when the outer part of the outer edge section (20) is at the first inclination.

5. Main part (11) according to claim 3 and 4, where the first surface (22) is adapted to engage an outer edge surface (30) of the cover (12) when forced to the second angle.

6. Main part (11) according to any of the preceding claims, where the main part (11) is formed with a first contact surface (28) adapted to contact a matching second contact surface (34) of the cover (12).

7. Main part (11) according to claim 6, where the first contact surface (28) is parallel to the line L.

8. Main part (11) according to any of the preceding claims, where the main part (11) is formed with a first contact surface (28) adapted to contact a matching second contact surface (34) of the cover (12).

9. Main part (11) according to claim 8, where the first contact surface (28) edges with a first sloping surface (27) which inclines relative to the line L at a third angle.

10. Main part (11) according to any of the preceding claims, where an outer recess (25) in the main part (11) is positioned just below the inner recess (23) in the direction from the opening towards the inner hollow (6) to reduce stresses in the material during the compression process.

11. Cover (12) of a valve housing (10) adapted to be inserted in connection to the main part (11) according to any of the preceding claims, where the cover (12) comprises a fourth surface (31) adapted to rest on the second recess (24).

12. Cover (12) according to claim 11, where the edge portion is formed with curving outer part (50) giving some resilient effect.

13. Valve housing (10) formed by the main part (11) according to any of claims 1-10 connected to the cover (12) according to any of claim 11 or 12.

14. Valve housing (10) formed of
- a main part (11) formed with an outer edge section (20) defining an inner surface and an outer surface and an opening from the externals to an inner hollow (6), where the inner surface is formed with an inner recess (23) with a first surface (22) and second surface (24), the main part (11) further comprising a first contact surface (28), the valve housing (10) further comprising
- a cover (12) comprising a fourth surface (31) and a second contact surface (33) and inserted in connection to the main part (11) such that the fourth surface (31) rests on the second recess (24),
where P defines the plane where the cover (12) is positioned to close the opening, where the line L extends orthogonal to the plate P from the inner hollow (6) towards the opening.

15. Method of making a valve housing (10) for a valve (1), where the valve housing formed of a main part (11) and a cover (12), where
- the main part (11) is formed with an outer edge section (20) defining an inner surface and an outer surface and an opening from the externals to an inner hollow (6), where the inner surface is formed with an inner recess (23) with a first surface (22) and second surface (24) defining a plane P where a cover (12) of the valve housing (10) is adapted to be positioned to close the opening, where at least the outer part of the outer edge section (20) is inclined relative at a first angle to the line L extending orthogonal to the plane P from the inner hollow (6) to the opening, the main part (11) further comprising a first contact surface (28), and where
- the cover (12) comprises a fourth surface (31) and a second contact surface (33), and where
the method comprises the steps of positioning the cover (12) inside the main part (11) such that the fourth surface (31) rests on the second surface (24),and where a next step is to radially compress the at least the outer part of the outer edge section (20) to a second angle where the upper and lower outer edge surfaces (30) of the cover (12) contacts the first surface (22) and second surface (24) to fix cover (12) in the position.
